# EUROPÄISCHE PATENTANMELDUNG

(11) **EP 1 229 630 A2**
(43) Veröffentlichungstag der Anmeldung: **07.08.2002**
(21) Anmeldenummer: 02001621.8
(22) Anmeldetag: 23.01.2002
(51) Int. Cl.: H02K 3/47, H02K 3/24

(54) **Vorrichtung zur Fixierung eines Wicklungssystems**

(30) Priorität: 05.02.2001 DE 10105076
(71) Anmelder: SIEMENS AKTIENGESELLSCHAFT, 80333 München (DE)
(72) Erfinder: Dressel, Gerhard, 90592 Schwarzenbruck (DE)

(57) **Zusammenfassung**

Vorrichtung (4) zur Fixierung eines Wicklungssystems (1), das sich zumindest teilweise im Luftspalt zwischen dem Joch (1) des Ständers (2) und einem Läufer (6) einer elektrischen Maschine befindet und aus elektrisch isolierenden, amagnetischen Material besteht, wobei diese Vorrichtung (4) eine zylindrische Grundstruktur aufweist, die radial nach außen zum Joch (1) weisende axial verlaufende Stege (8) aufweist, die zumindest teilweise in dementsprechend geformte Ausnehmungen (9) des Jochs (1) eingreift.

## Beschreibung

Die Erfindung betrifft eine Vorrichtung zur Fixierung eines Wicklungssystems, das sich zumindest teilweise im Luftspalt zwischen dem Joch des Ständers und einem Läufer einer elektrischen Maschine befindet.

Die Wicklung einer elektrischen Maschine, also die Gesamtheit elektrischer Leiter samt ihrer Isolierung, soll magnetische Felder erzeugen, oder es soll in ihr durch Magnetfelder eine Spannung entstehen.

Es werden dabei u.a. Wicklungen in Nuten des Ständerjochs und im Luftspalt der elektrischen Maschine, sogenannten Luftspaltwicklungen unterschieden.

Aus der DE 30 03 483 A ist eine Anordnung zur Befestigung einer Luftspaltwicklung im Ständer einer elektrischen Maschine bekannt, bei welcher in Umfangsrichtung zwischen den einzelnen Wicklungsstäben der Luftspaltwicklung Distanzkeile eingesetzt sind, wobei die Wicklungsstäbe und die Distanzkeile durch am äußeren Umfang angebrachten Bandage eine in die Bohrung des Ständerblechpakets einschiebbare Einheit bilden. Des Weiteren sind die Distanzkeile kammförmig gezahnt, wobei die Kammzähne radial nach außen über die Wicklungsstäbe hinausragen, dass die Bandagen in die Lücken zwischen benachbarten Kammzähnen eingewickelt sind und dass die Kammzähne in entsprechende Ausnehmungen eines Wicklungsträgers, der als nichtmetallischer Hohlzylinder ausgebildet ist, formschlüssig gehalten sind.

Des Weiteren ist aus der DE 21 65 678 eine Haltevorrichtung für die im Luftspalt eines Synchrongenerators angeordnete Ständerwicklung beschrieben, die aus zwei zwischen sich die Ständerwicklung festlegenden und als Einheit in die Bohrung des Ständerblechpakets eingeschobenen Hohlzylindern besteht. Der äußere Hohlzylinder ist aus unmagnetischen Stahl und weist nach innen offene Nuten zur Aufnahme der Ständerwicklung auf, wobei in seine Bohrung ein innerer die Nuten abdeckender Hohlzylinder aus Kunststoff eingeschoben ist.

Nachteilig bei dem bekannten Stand der Technik ist u.a., dass die bekannten Haltevorrichtungen bzw. Anordnungen zur Fixierung der Wicklung im Luftspalt aus mehreren Teilen, die ebenfalls zu positionieren und fixieren sind, bestehen, so dass die Montage umständlich und damit zeitaufwendig ist.

Ausgehend davon liegt der Erfindung die Aufgabe zugrunde, eine Vorrichtung zur Fixierung eines Wicklungssystems in einem Luftspalt einer elektrischen Maschine zu schaffen, die mit wenigen Montageschritten zu der gewünschten Anordnung führt und den Betriebsbedingungen der einzelnen elektrischen Maschinen gewachsen ist.

Die Lösung der gestellten Aufgabe gelingt durch eine Vorrichtung zur Fixierung eines Wicklungssystems, das sich zumindest teilweise im Luftspalt zwischen dem Joch des Ständers und einem Läufer einer elektrischen Maschine befindet und aus elektrisch isolierenden, amagnetischen Material besteht, wobei diese Vorrichtung eine zylindrische Grundstruktur aufweist, die radial nach außen zum Joch weisende axial verlaufende Stege aufweist, die zumindest teilweise in dementsprechend geformte Ausnehmungen des Jochs eingreifen.

Die erfindungsgemäße Vorrichtung ist idealerweise einteilig ausgeführt, so dass sich die Teilevielfalt der Vorrichtung gegenüber dem bekannten Stand der Technik erheblich reduziert. Der somit verringerte Montageaufwand führt z.B. bei der Herstellung einer elektrischen Maschine zu einer erheblichen Zeitersparnis. Außerdem sind derartige Vorrichtungen auf Lager zu halten, so daß je nach Achshöhe nur die dementsprechenden Vorrichtungen sofort einsetzbar sind. Es sind auch Vorrichtungen mit Wicklungssystemen bereits in einer Vorfertigung herstellbar.

Durch die kammförmig ausgebildeten Stege in axialer Richtung wird in den radial zurückgesetzten Abschnitten der Stege das Anbringen einer Bandage des Wicklungssystems ermöglicht. Durch diese Bandage werden insbesondere die radialen Kräfte im Betrieb z.B. einer elektrischen Maschine aufgenommen. Die an sich bekannten Bandagen sind beispielweise aus mit einem aushärtbaren Harz getränkte Gewebestränge. Vorzugsweise entspricht die Dicke der Bandage der Höhe der radial zurückgesetzten Stege.

In einer weiteren Ausgestaltung, sind die einzelnen radial zurückgesetzten Abschnitt der einzelnen Stege so angeordnet, dass die Bandage in Umfangsrichtung oder wendelförmig auf das Wicklungssystem aufgebracht werden kann. Damit lassen sich je nach individuellen Betriebsbedingungen z.B. einer elektrischen Maschine spezielle und vorteilhafte Fixierungen des Wicklungssystems erhalten. Durch diese Fixierung lassen sich insbesondere die am Wicklungssystem angreifende radialen Kräfte beherrschen.

Für die Montage des Wicklungssystems ist es, wie bereits ausgeführt, vorteilhaft, wenn die Vorrichtung einteilig ausgebildet ist. Es sind aber auch axiale oder in Umfangsrichtung gestaltete Segmente dieser Vorrichtung möglich. Dies ist insbesondere vorteilhaft bei größeren Vorrichtungen, wie z.B. bei Verwendung für größere Synchrongeneratoren. Dabei sind insbesondere die Segmente in axialer Richtung vorteilhafterweise so ausgebildet, dass Segmente mit unterschiedlichen Höhen der Stege vorhanden sind, die, ausgerichtet aneinandergereiht einen jeweils kammförmigen Verlauf der axialen Stege über die gesamte axiale Länge der Vorrichtung bilden.

Um einen ordnungsgemäßen Betrieb z. B. einer elektrischen Maschine auch bei segmentartig aufgebauter Vorrichtung zu erhalten, weisen die einzelnen Segmente Mittel auf, die ein gegenseitiges Verbinden der einzelnen Segmente gestatten. Dabei sind sämtliche stoff- und/oder formschlüssige Mittel vorzusehen. Dies können u.a. die allgemein bekannten Schwalbenschwanzverbindungen und/oder Klebeverbindungen sein.

Das Wicklungssystem selbst ist vorteilhafterweise durch die Bandage und/oder durch Vergießen an der Vorrichtung selbst fixierbar. Somit ist je nach Einsatzgrad, der unterschiedliche Kräftebeanspruchung auf das Wicklungssystem verursacht eine dem Einzelfall angepasste Fixierung des Wicklungssystems möglich.

Insbesondere für elektrische Maschinen mit supraleitendem Läufer ist es vorteilhaft, dass die zu dem Läufer weisende Fläche der Vorrichtung insbesondere thermisch geschlossen ist. Damit wird ein Wärmeeintrag über den Luftspalt zum Läufer nahezu ausgeschlossen und eventuelle Kühlsysteme des Ständers können die in dem Wicklungssystem entstehende Wärme effizient abführen.

Vorteilhaft ist in einer anderen Ausgestaltung der Zylinderfläche der Vorrichtung eine netzartige Gestaltung der zum Läufer weisenden Zylinderfläche, insbesondere bei Läufern die nicht supraleitend sind. Damit stellt sich auch eine gewisse Kühlwirkung im Luftspalt ein, da sich zusätzliche axiale und radiale Kühlkanäle im und um das Wicklungssystem einstellen.

Die Kühlwirkung der netzartig ausgeformten Struktur der zum Läufer weisenden Fläche der Vorrichtung lässt sich durch speziell geformte und ausgerichtete Stege günstig beeinflussen.

Als besonders vorteilhaft hat sich erwiesen, dass beider netzartig ausgeführten Struktur Verzahnungselemente an den Kreuzungspunkten der axialen und im wesentlichen in Umfangsrichtung verlaufenden Stege ausgebildet sind. Diese Verzahnungselemente greifen in dafür vorgesehene Ausnehmungen im Joch ein. Damit ist die mechanische Struktur der Vorrichtung relativ stabil.

Durch einen axialen Überhang des Jochs des Ständers einer elektrischen Maschine über die Wickelköpfe und eine Bandagierung der Wickelköpfe in zumindest vorgebbaren axialen Abschnitten, stellt sich zwischen Joch und dem Wicklungssystem ein auch über die Wicklungsköpfe hinweg gleichmäßige Querschnitts eines im wesentlichen axialen verlaufenden Kühlkanals zwischen Joch und dem durch die Bandage fixierten Wicklungssystems ein. Damit wird in effizienter Weise das Wicklungssystem gekühlt und ein Wärmeübertrag über die zum Läufer weisende Zylinderfläche nahezu unterbunden.

Die Lösung der gestellten Aufgabe gelingt auch durch ein Verfahren zur Herstellung einer elektrischen Maschine mittels der Vorrichtung nach Anspruch 1 und ist durch folgende Schritte gekennzeichnet:
- Paketierung des Jochs des Ständers einer elektrischen Maschine aus vorgegebenen Blechen,
- radiales Einlegen einer Wicklung in die Vorrichtung,
- Einsetzen der Vorrichtung in das Joch des Ständers durch Fixieren der radialen Stege im Joch.

Es können nahezu beliebige Wicklungssysteme (z.B. Mehrschichtwicklungen, etc.) in die Vorrichtung eingelegt werden.

Um eine Komprimierung des Wicklungssystems auf der Vorrichtung zu erhalten, und um einen eventuellen Kühlkanal zwischen Joch und dem Wicklungssystem mit möglichst großer Querschnittsfläche zu erhalten, wird das Wicklungssystem vorteilhafterweise über die kammartigen Stege bandagiert. Damit wird der Kühlkanal in seinem Querschnitt nicht eingeengt. D.h., die kammförmigen Vertiefungen der Stege entsprechen vorteilhafterweise der Dicke der Bandage. Um das Wicklungssystem zusätzlich zu fixieren, ist außerdem oder alternativ zur Bandagierung des Wicklungssystems dieses auch zu vergießen. Durch Bandagieren der Wicklungsköpfe wird gleichzeitig eine Komprimierung dieser Wickelköpfe erreicht, so dass die Querschnittsfläche des axial durchgehenden Kühlkanals nahezu unverändert ist.

Um einen weiteren Wärmeeintrag in Richtung Läufer zu vermeiden und auch als Montagehilfe ist es besonders vorteilhaft im axialen Anschluss an diese Vorrichtung, radial innerhalb der Wicklungsköpfe einen elektrisch isolierenden amagnetischen Zylindermantel anzustücken.

Die Erfindung sowie weitere vorteilhafte Ausgestaltungen der Erfindung gemäß Merkmale der Unteransprüche werden im folgenden anhand schematisch dargestellter Ausführungsbeispiele in der Zeichnung näher erläutert. Darin zeigen:
- FIG 1: einen Querschnitt eines Ständers einer elektrischen Maschine mit erfindungsgemäßer Vorrichtung,
- FIG 2: einen Längsschnitt einer elektrischen Maschine mit erfindungsgemäßer Vorrichtung.

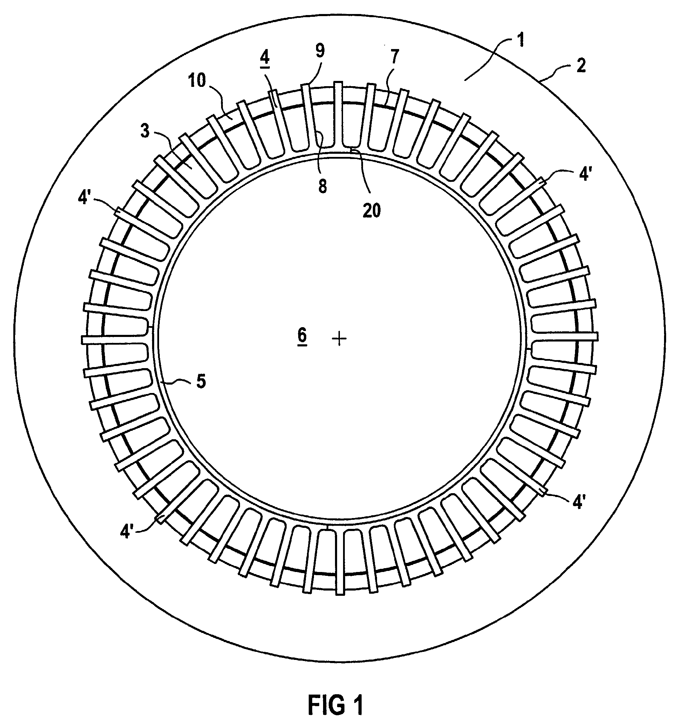

FIG 1 zeigt in prinzipieller Darstellung das Joch 1 eines Ständers 2 einer nicht näher dargestellten elektrischen Maschine. Die elektrische Maschine weist eine Wicklung auf, die als Luftspaltwicklung 3 ausgeführt ist. Die Luftspaltwicklung 3 ist durch die Vorrichtung 4 im Luftspalt 5 zwischen Läufer 6 und der Vorrichtung 4 gehalten. Durch eine Bandage 7, die im wesentlichen in Umfangsrichtung der Vorrichtung 4 verläuft, wird die Luftspaltwicklung 3 komprimiert und auf der Vorrichtung 4 fixiert. Die Bandage 7 verläuft vorteilhafterweise in den kammartigen Vertiefungen der axial verlaufenden Stege 8.

Die in Umfangsrichtung betrachtet radial nach außen weisenden Stege 8 der Vorrichtung 4 weisen einen sternförmigen Aufbau auf. Die äußeren Enden der Stege 8 greifen in das Joch 1 ein. Dabei sind im Joch 1 im wesentlich axial verlaufende Ausnehmungen 9 vorgesehen. Durch den Eingriff der Stege 8 in das Joch 1 können tangentiale Kräfte der Luftspaltwicklung 3 vom Joch 1 aufgenommen werden , z.B. bei einem elektrischen Fehlerfall, die in dieser Darstellung gewählte Form der Stege 8 ist beispielhaft, sie sind ebenso keilförmig ausführbar.

Zwischen Joch 1 und der Luftspaltwicklung 3 bzw. der darüber liegenden Bandage 7 sind im wesentlichen axial verlaufende Kanäle 10 ausgebildet. Damit lässt sich ein Kühlsystem für den Ständer 2 der elektrischen Maschine realisieren. In die vorhandenen Kanäle 10 lässt sich ein gasförmiges Medium, insbesondere Luft durchleiten und/oder rohrförmige Kühlkanäle einlegen um eine Flüssigkeitskühlung zu realisieren.

Die Vorrichtung 4 kann ebenso durch einzelne in Umfangsrichtung gestaltete Segmente 4' gebildet werden, die an den jeweiligen Stoßkanten 20 verbindbar sind.

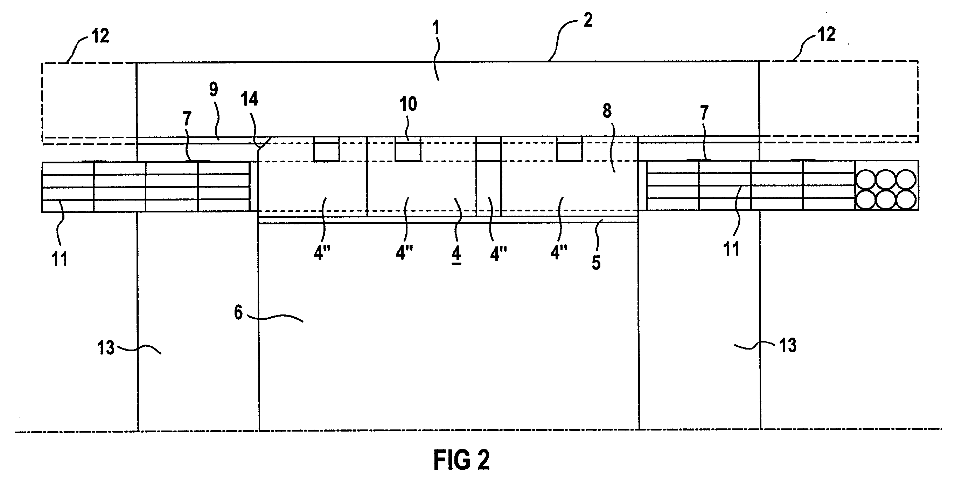

FIG 2 zeigt in einem prinzipiellen Längsschnitt die Anordnung der einzelnen Komponenten und legt deren Wirkungsweise nahe. Axial über die Vorrichtung 4 überstehend sind die Wickelköpfe 11 des Wicklungssystems, das als Luftspaltwicklung 3 ausgeführt ist, angeordnet. Die Wickelköpfe 11 der Luftspaltwicklung 3 sind gegebenenfalls durch Bandagen 7 ebenso wie das Wicklungssystem innerhalb der Vorrichtung selbst komprimiert und fixiert. Die Bandagen 7 sind dabei insbesondere im Bereich der Vorrichtung 4 in den kammförmigen Vertiefungen der Stege 8 angeordnet, um den Querschnitt des sich axial einstellenden Kühlkanals 10 nicht zu verringern. Durch axiale Abstände der einzelnen Bandagen 7 auf den Wickelköpfen 11 stellen sich unterschiedliche Kühlkanäle in radialer Richtung durch den Wickelkopf 11 ein.

Um die Kühlwirkung insbesondere im Bereich des Wickelkopfes 11 weiter zu verbessern, wird das Joch 1 axial über die Wickelköpfe gezogen, wie durch das Bezugszeichen 12 angedeutet ist. Damit stellt sich über nahezu die gesamte axiale Länge des Ständers 2 der elektrischen Maschine ein Kühlkanal von nahezu identischen Querschnitt ein, so dass eine ausreichende Belüftung der Luftspaltwicklung 3 in der Vorrichtung 4 und der Wickelköpfe 11 gewährleistet ist. Durch die geschlossene Zylinderfläche der Vorrichtung 4 in Richtung Luftspalt 5, wird insbesondere der Läufer 6 vor Wärmeeintrag aus dem Ständer 2 geschützt. Dies ist insbesondere bei supraleitenden Läufern von Vorteil.

Um die Montage zu vereinfachen, d.h. die komplett fertiggestellte Vorrichtung 4 in das Joch 1 einzusetzen, ist es vorteilhaft, wenn die Stege 8 eine Anfasung 14 aufweisen.

Um den Wärmeeintrag in den Läufer weiter zu reduzieren, insbesondere aus dem Bereich der Wickelköpfe 11, wird eine zylinderförmige elektrisch isolierende Hülse 13 an beiden axialen Enden der Vorrichtung im Bereich der Wickelköpfe angesetzt. Diese Hülse 13 ist durch stoff- und/oder reibschlüssige Verbindungen mit der Vorrichtung 4 verbindbar. Diese Hülse 13 dienen gleichzeitig zur Stützung des Wickelkopfes 11. Sie sind somit auch als Montagehilfe einsetzbar.

Die Vorrichtung 4 kann außerhalb aus axiale Segmente 4" gebildet werden. FIG 2 zeigt einzelne Segmente 4" mit unterschiedlich axialen Längen.

Es ist auch eine Kombination von axial und in Umfangsrichtung gestalteten Segmenten 4', 4" möglich.

Die Segmente 4', 4" sind grundsätzlich miteinander verbindbar.

## Patentansprüche

1. Vorrichtung (4) zur Fixierung eines Wicklungssystems (3), das sich zumindest teilweise im Luftspalt zwischen dem Joch (1) des Ständers (2) und einem Läufer (6) einer elektrischen Maschine befindet und aus elektrisch isolierenden, amagnetischen Material besteht, wobei diese Vorrichtung (4) eine zylindrische Grundstruktur aufweist, die radial nach außen zum Joch (1) weisende axial verlaufende Stege (8) aufweist, die zumindest teilweise in dementsprechend geformte Ausnehmungen (9) des Jochs (1) eingreifen.

2. Vorrichtung nach Anspruch 1, **dadurch gekennzeichnet, dass** die Stege (8) in axialer Richtung kammförmig ausgebildet sind und in den radial zurückgesetzten Abschnitten der Stege das Anbringen einer Bandage (7) des Wicklungssystems (3) ermöglichen.

3. Vorrichtung nach Anspruch 2, **dadurch gekennzeichnet, dass** die radial rückgesetzten Abschnitte der einzelnen axial verlaufenden Stege (8) so ausgerichtet sind, daß eine Anordnung der Bandage (7) des Wicklungssystems (3) in Umfangsrichtung und/oder wendelförmig ausführbar ist.

4. Vorrichtung nach einem der vorhergehenden Ansprüche, **dadurch gekennzeichnet, dass** die Vorrichtung (4) einteilig ausgebildet ist.

5. Vorrichtung nach einem oder mehreren der vorhergehenden Ansprüche 1 bis 3, **dadurch gekennzeichnet, dass** die Vorrichtung (4) axial und/oder in Umfangsrichtung durch verschiedene Segmente (4',4") aufgebaut ist.

6. Vorrichtung nach Anspruch 5, **dadurch gekennzeichnet, dass** die einzelnen Segmente (4',4") Mittel aufweisen, die ein gegenseitiges Verbinden der einzelnen Segmente (4',4") gestatten.

7. Vorrichtung nach Anspruch 6, **dadurch gekennzeichnet, dass** die Segmente (4',4") stoffund/oder formschlüssig miteinander verbindbar sind.

8. Vorrichtung nach einem oder mehreren der vorhergehenden Ansprüche, **dadurch gekennzeichnet, dass** das Wicklungssystem (3) durch eine Bandage (7) und/oder Vergießen an der Vorrichtung (4) fixierbar ist.

9. Vorrichtung nach einem oder mehreren der vorhergehenden Ansprüche, **dadurch gekennzeichnet, dass** die Vorrichtung (4) eine zum Läufer (6) weisende geschlossene Zylinderfläche bildet.

10. Vorrichtung nach einem der Ansprüche 1 bis 9, **dadurch gekennzeichnet, dass** die zum Läufer (6) weisende Zylinderfläche der Vorrichtung (4) netzartig ausgeführt ist.

11. Vorrichtung nach Anspruch 10, **dadurch gekennzeichnet, dass** die netzartige Struktur durch axial und im wesentlichen in Umfangsrichtung verlaufende Stege (8) gebildet ist.

12. Vorrichtung nach Anspruch 10 oder 11, **dadurch gekennzeichnet, dass** an den Verbindungsstellen der netzartig ausgeführten Struktur Verzahnungselemente vorhanden sind, die eine Fixierung der Vorrichtung (4) im Joch (1) ermöglichen.

13. Elektrische Maschine mit einer Vorrichtung nach Anspruch 1, **dadurch gekennzeichnet, dass** das Joch (1) des Ständers (2) zumindest axial über die an der Stirnseite der elektrischen Maschine vorhandenen Wickelköpfe (11) ragt.

14. Elektrische Maschine nach Anspruch 13, **dadurch gekennzeichnet, dass** die Wickelköpfe (11) zumindest abschnittsweise bandagiert sind.

15. Elektrische Maschine nach Anspruch 13 oder 14, **dadurch gekennzeichnet, dass** axial verlaufende Kühlkanäle (10) zwischen Joch (1) und dem Wicklungssystem (3) vorhanden sind und die Querschnittsfläche der Kühlkanäle (10) sich im wesentlichen auch über die Wickelköpfe (3) erstreckt.

16. Verwendung einer Vorrichtung nach Anspruch 1 bei supraleitenden elektrischen Maschinen, insbesondere Synchrongeneratoren.

17. Verfahren zur Herstellung einer elektrischen Maschine nach Anspruch 13, **gekennzeichnet durch** folgende Schritte:
- Paketieren des Jochs (1) des Ständers (2) aus vorgebbaren Blechen,
- radiales Einlegen eines Wicklungssystems (3) in die Vorrichtung (4) ,
- axiales Einsetzen der Vorrichtung (4) in das Joch (1) des Ständers (2) **durch** Fixieren der radialen Stege (2) im Joch (1).

18. Verfahren nach Anspruch 17, **dadurch gekennzeichnet, dass** das Wicklungssystem (3) vor Einsetzen in das Joch (1) des Ständers (2) in der Vorrichtung (4) bandagiert und/oder vergossen wird.

19. Verfahren nach Anspruch 17 oder 18, **dadurch gekennzeichnet, dass** im axialen Anschluss der Vorrichtung (4) radial innerhalb der Wicklungsköpfe (11) eine elektrisch isolierende amagnetischer Hülse (13) befindet.
